# EUROPÄISCHE PATENTSCHRIFT

(11) **EP 3 132 217 B1**
(45) Veröffentlichungstag und Bekanntmachung des Hinweises auf die Patenterteilung: **04.04.2018**
(21) Anmeldenummer: 15709421.0
(22) Anmeldetag: 12.02.2015
(51) Int. Cl.: A61C 13/20, F27B 17/02

(54) **SINTEROFEN FÜR BAUTEILE AUS SINTERWERKSTOFF, INSBESONDERE DENTALBAUTEILE**
SINTERING FURNACE FOR COMPONENTS MADE OF SINTERED MATERIAL, IN PARTICULAR DENTAL COMPONENTS
FOUR DE FRITTAGE POUR COMPOSANTS EN MATIÈRE FRITTÉE, EN PARTICULIER POUR COMPOSANTS DENTAIRES

(30) Priorität: 12.02.2014 DE 102014202575
(43) Veröffentlichungstag der Anmeldung: 22.02.2017
(73) Patentinhaber: Sirona Dental Systems GmbH, 64625 Bensheim (DE)
(72) Erfinder: FORNOFF, Peter, 64385 Reichelsheim (DE); SCHMIDT, Christian, 64625 Bensheim (DE)
(74) Vertreter: Sommer, Peter
(86) Internationale Anmeldenummer: PCT/EP2015/053001
(87) Internationale Veröffentlichungsnummer: WO 2015/121364

(56) Entgegenhaltungen:
- WO-A1-2013/068312
- WO-A1-2014/016320
- DE-A1- 19 824 497
- DE-U1-202011 003 179
- US-A1- 2011 114 626

## Beschreibung

### Technisches Gebiet

Die Erfindung betrifft einen Dentalsinterofen für Bauteile aus einem Sinterwerkstoff, insbesondere für Dentalbauteile und insbesondere für Bauteile aus Keramik, umfassend eine Ofenkammer mit einem Kammervolumen, wobei in der Ofenkammer eine Aufheizvorrichtung, ein Aufnahmeraum mit einem im Kammervolumen liegenden durch die Aufheizvorrichtung begrenzten Bruttovolumen und ein Nutzbereich mit einem im Bruttovolumen liegenden Nutzvolumen angeordnet sind und wobei die Ofenkammer eine aus mehreren Wänden bestehende Umwandung mit einem in zumindest einer der Wände zu öffnenden Wandabschnitt zum Einbringen eines zu sinternden Bauteils mit einem Objektvolumen in den Aufnahmeraum aufweist.

### Stand der Technik

Entscheidend für die Gestaltung eines Sinterofens ist das zu sinternde Material. Gesintert werden grundsätzlich metallische oder keramische Formkörper, die aus einem Pulver gepresst wurden und die eventuell entweder direkt oder nach einem Ansinterprozess durch einen Fräs- oder Schleifprozess weiterverarbeitet wurden. Das Material bestimmt das notwendige Temperaturprofil. Die Größe und die Menge der Bauteile bestimmt die Baugröße des Ofens und ebenso das Temperaturprofil. Je heißer der Ofen sein soll, umso dickwandiger ist die Isolation. Die Baugröße des Ofens, der Bauteile und die gewünschte Aufheizgeschwindigkeit bestimmen die Auslegung des Heizsystems und des Regelverhaltens. Dabei spielt auch die Stromversorgung eine Rolle. Letztendlich unterscheidet vor allem die Baugröße und auch die zur Verfügung stehende Stromversorgung einen Dentalofen für ein Labor von einem Industriesinterofen.

Wärmebehandlungsprozesse, insbesondere das vollständige Sintern von dentalen Restaurationen aus vorgesinterten Keramiken oder Metallen unter Verwendung eines Sinterofens dauern typischer Weise zwischen 60 min und mehreren Stunden. Der Herstellungsprozess einer dentalen Restauration, die auch noch vorbereitende sowie nachfolgende Schritte erfordert, wird durch diesen Zeitbedarf eines Einzelschritts nachhaltig unterbrochen. So benötigt das sogenannte Speed-Sintern für Zirkonoxid minimal 60 min.

Das sogenannte Super-Speed-Sintern für Zirkonoxid benötigt heute nur noch minimal 15 Minuten Prozessdurchlaufzeit. Dies setzt allerdings voraus, dass der Sinterofen, insbesondere aufgrund seiner Masse, auf die vorgesehene Haltetemperatur vorgeheizt wird, was abhängig von der verfügbaren Netzspanung zwischen 30 und 75 Minuten dauert. Weiterhin muss der Ofen nach dem Vorheizen über eine automatische Beladesequenz beladen werden, damit spezielle Temperaturprofile eingehalten werden können und der Ofen nicht unnötig abkühlt.

Ein Nachteil des Vorheizens und anschließenden Beladens ist jedoch, dass der Ofen, insbesondere dessen Isolation sowie dessen Heizelemente einer hohen thermischen Wechselbelastung ausgesetzt werden, was sich mindernd auf die Gerätelebensdauer auswirkt.

Sinteröfen sind beispielsweise aus der WO 2014/016320 A1, der US 2011/114626 A1, der DE 198 24 497 A1, der DE 20 2011 003179 U1 und der WO 2013/068312 A1 bekannt.

Die Aufgabe der vorliegenden Erfindung besteht daher darin, einen Sinterofen bereitzustellen, der eine entsprechend kurze Herstellungszeit ermöglicht, ohne dass ein Vorheizen des Sinterofens und/oder eine spezielle Beladesequenzen notwendig sind.

### Darstellung der Erfindung

Diese Aufgabe wird durch einen Dentalsinterofen für Bauteile aus einem Sinterwerkstoff, insbesondere für Dentalbauteile und insbesondere für Bauteile aus Keramik, gelöst, der eine Ofenkammer umfasst, die ein Kammervolumen aufweist und in der eine Aufheizvorrichtung, ein Aufnahmeraum und ein Nutzbereich angeordnet sind. Der Aufnahmeraum nimmt ein im Kammervolumen liegendes und durch die Aufheizvorrichtung begrenztes Bruttovolumen ein. Der Nutzbereich weist ein Nutzvolumen auf und liegt im Aufnahmeraum. Die Ofenkammer weist weiterhin eine aus mehreren Wänden bestehende Umwandung mit zumindest einem zu öffnenden Wandabschnitt zum Einbringen eines zu sinternden Bauteils mit einem Objektvolumen in den Aufnahmeraum auf. Die Aufheizvorrichtung in der Ofenkammer weist mindestens einen thermischen Strahler mit einem Strahlungsfeld auf, der an mindestens einer Seite des Aufnahmeraums angeordnet ist und in dessen Strahlungsfeld zumindest das Nutzvolumen des Nutzbereichs angeordnet ist. Der maximal mögliche Abstand des zu sinternden Bauteils zu dem Strahler entspricht höchstens der zweitgrößten Dimension des maximalen Nutzvolumens.

Dabei steht das Nutzvolumen zum Kammervolumen der Ofenkammer in einem Verhältnis von 1:50 bis 1:1 und zum Bruttovolumen des Aufnahmeraums in einem Verhältnis von 1:20 bis 1:1.

Die Ofenkammer, auch Brennkammer genannt, bildet den das zu sinternde Bauteil aufnehmenden und erhitzenden Teil, also den Kern des Sinterofens. Das gesamte von der Ofenkammer umschlossene Volumen wird als Kammervolumen bezeichnet. Der zwischen der in der Ofenkammer angeordneten Aufheizvorrichtung verbleibende freie Raum kann das zu sinternde Bauteil aufnehmen und wird daher als Aufnahmeraum bezeichnet. Das Volumen des Aufnahmeraums ergibt sich im Wesentlichen aus der zwischen der Aufheizvorrichtung und gegebenenfalls den Kammerwänden verbleibenden lichten Weite und Höhe und wird daher als Bruttovolumen bezeichnet.

Als Nutzbereich wird der Bereich des Sinterofens bezeichnet, in dem die für den Sinterprozess notwendige bzw. gewünschte Temperatur mittels der Heizvorrichtung erreicht wird. Der Nutzbereich ist somit der Bereich, in dem das von dem thermischen Strahler erzeugte Strahlungsfeld die nötige Intensität und/oder Homogenität für den Sinterprozess aufweist und in dem das Bauteil für die Sinterung positioniert wird. Dieser Nutzbereich ergibt sich somit im Wesentlichen aus dem Strahlungsfeld bzw. aus der Anordnung der Aufheizvorrichtung und deren Abstrahlcharakteristik und kann entsprechend kleiner sein als das Bruttovolumen. Für einen erfolgreichen Sinterprozess sollte das Objektvolumen des zu sinternden Objekts daher maximal die Größe des Nutzvolumens aufweisen. Andererseits sollte für möglichst effiziente und schnelle Sintervorgänge die Größe des Nutzvolumens maximal die Größe einer oberen Abschätzung der zu sinternden Objektvolumen aufweisen.

Soll der Ofen zum Sintern von Objekten verschiedener Größe verwendbar sein, beispielsweise zum Sintern von einzelnen Zahnkronen und auch von Brücken, so kann es daher vorteilhaft sein, den Strahler der Aufheizvorrichtung bewegbar auszugestalten, so dass die Größe des Aufnahmeraums, also das Bruttovolumen, sowie insbesondere die Größe des Nutzbereichs, also das Nutzvolumen, an die Größe des Objekts anpassbar ist.

Das Nutzvolumen kann aber auch durch das Verkleinern des Nutzbereichs verringert und an die Objektgröße angepasst werden. Beispielsweise kann mit einem isolierenden Türeinsatz ein Teil des Aufnahmeraums ausgeblockt werden.

Durch eine möglichst gute Ausnutzung des Bruttovolumens, also ein im Verhältnis zum Bruttovolumen möglichst großes Nutzvolumen, kann das während des Sinterprozesses zu erwärmende Volumen möglichst gering gehalten werden, wodurch ein schnelles Aufheizen und insbesondere das Einsparen eines Vorheizprozesses möglich ist.

Dentale Objekte haben typischerweise Größen von nur wenigen Millimetern bis Zentimetern, so dass entsprechend ein Nutzvolumen im Bereich von Zentimetern typischerweise ausreicht. Für zu sinternde Einzelzahnrestaurationen, wie Kronen oder Käppchen, kann beispielsweise ein Nutzvolumen von 20x20x20 mm³ ausreichen. Für größere dentale Objekte, wie beispielsweise Brücken, kann ein Nutzvolumen von 20x20x40 mm³ ausreichen. Die Dimensionen des Nutzvolumens (VN) können dann vorteilhafterweise höchstens 20 mm x 20 mm x 40 mm betragen. Entsprechend kann der maximal mögliche Abstand des zu sinternden Bauteils zum Strahler für einen dentalen Sinterofen beispielsweise auf 20mm beschränkt bzw. sichergestellt werden.

Je weniger Volumen und je weniger Masse insgesamt erwärmt werden müssen, umso schneller kann eine gewünschte Temperatur in der Ofenkammer bzw. im Nutzbereich erreicht werden und ist der Sinterprozess erfolgreich durchführbar. Beispielsweise kann das Kammervolumen der Ofenkammer 60x60x45 mm³ und das Bruttovolumen noch 25x35x60 mm³ betragen.

Vorteilhafterweise steht das Nutzvolumen für das zu sinternde Bauteil zum Objektvolumen des zu sinternden Bauteils in einem Verhältnis von 1500:1 bis 1:1.

Je kleiner der Unterschied zwischen dem Nutzvolumen des Nutzbereichs und dem Objektvolumen des zu sinternden Bauteils ist, um so energieeffizienter und schneller ist der Sintervorgang für das Bauteil durchführbar.

Vorteilhafterweise weist die Umwandung eine für das Strahlungsfeld undurchlässige und/oder dieses zurückgebende Kammerinnenwand auf, die insbesondere eine reflektierende Beschichtung trägt oder als Reflektor ausgebildet ist.

Durch eine reflektierende Beschichtung kann die Intensität des Strahlungsfelds des Strahlers im Nutzbereich, also innerhalb des Nutzvolumens erhöht werden. Ist der Strahler nur an einer Seite des Aufnahmeraums angeordnet, so kann mittels einer beispielsweise gegenüberliegenden reflektierenden Beschichtung oder einem gegenüberliegend angeordneten Reflektor ein homogeneres und/oder intensitätsstärkeres Strahlungsfeld im Nutzbereich erreicht werden.

Vorteilhafterweise weist die Aufheizvorrichtung ein Heizelement mit einer Aufheizrate im Nutzbereich von mindestens 200 K/min bei 20°C auf.

Vorteilhafterweise ist das Heizelement resistiv oder induktiv erwärmbar.

Induktive oder Wiederstandsheizelemente stellen einfache Ausführungsvarianten für ein Heizelement eines Sinterofens dar.

Vorteilhafterweise kann der Strahler als Tiegel ausgebildet sein, da hier das Nutzvolumen dem Bruttovolumen entsprechen kann.

### Kurzbeschreibung der Zeichnungen

Die Erfindung wird anhand der Zeichnung erläutert. Es zeigt:
- Fig. 1: einen Teil eines erfindungsgemäßen Sinterofens für Bauteile aus einem Sinterwerkstoff, insbesondere für Dentalbauteile;
- Fig. 2A, B: eine induktiv erwärmbare Aufheizvorrichtung mit einem aus Tiegel und Spule bestehenden Strahler;
- Fig. 3: einen plattenförmigen induktiv erwärmbaren thermischen Strahler mit integrierter Spule;
- Fig. 4A, B: resistiv erwärmbare Aufheizvorrichtungen mit aus stabförmigen Heizelementen bestehendem thermischen Strahler;
- Fig. 5: eine Heizspirale als Widerstandsheizelement;
- Fig. 6: einen aus Heizspirale und Reflektor bestehenden thermischen Strahler;
- Fig. 7: einen aus U-förmigen Heizelementen bestehenden thermischen Strahler;
- Fig. 8: einen aus Flachheizelementen bestehenden thermischen Strahler.

### Ausführungsbeispiel

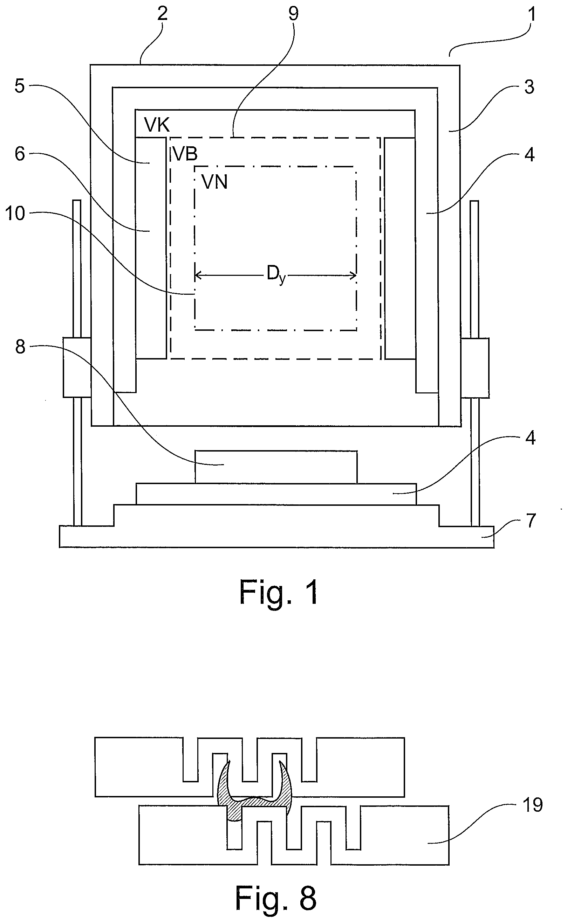

Die Fig. 1 zeigt einen Teil eines Sinterofens 1, der eine Ofenkammer 2 mit einem Kammervolumen VK aufweist, deren Wände 3 mit einer Isolierung 4 zum Abschirmen der heißen Ofenkammer 2 gegen die Umgebung versehen sind. Zum Aufheizen der Ofenkammer 2 ist in der Ofenkammer 2 eine Aufheizvorrichtung 5 mit zwei thermischen Strahlern 6 angeordnet. Die Ofenkammer 2 weist einen zu öffnenden Wandabschnitt 7 zum Einbringen eines zu sinternden Bauteils 15 in die Ofenkammer 2 auf, der hier der untere Wandabschnitt, also der Boden der Ofenkammer 2 ist. Der Boden 7 weist ebenfalls eine Isolierung 4 auf, auf die eine Unterlage 8 für die zu sinternden Bauteile 15 abgestellt ist, die auch als Träger 8 bezeichnet wird. Als Träger 8 kommen aber auch Bügel oder ein Tiegel oder senkrecht stehende Stifte aus Keramik oder hochschmelzendem Metall in Betracht, auf die das Bauteil 15 aufgesetzt wird.

Durch die Aufheizvorrichtung 5 bzw. den thermischen Strahler 6, der in Fig. 1 beispielhaft an zwei Seiten der Ofenkammer 2 angeordnet ist, ergibt sich innerhalb der Ofenkammer 2 ein im Vergleich zum Kammervolumen VK geringeres freies Volumen, welches in Fig. 1 mit gestrichelter Linie angedeutet ist und als Bruttovolumen VB bezeichnet wird. Der Raum, den dieses Bruttovolumen VB einnimmt, ist der Aufnahmeraum 9, in den ein zu sinterndes Objekt 15 eingebracht werden kann.

Mit dem Strahler 6 der Aufheizvorrichtung 5 wird ein Aufheizen des Aufnahmeraums 9 erreicht, wobei zumindest ein Teil des Bruttovolumens VB des Aufnahmeraums 9 ausreichend stark und gleichmäßig aufgeheizt wird. Dieser Bereich wird als Nutzbereich 10 und das Volumen als Nutzvolumen VN bezeichnet. Der Nutzbereich 10 ist in Fig. 1 mit einer strichpunktierten Linie schematisch dargestellt und eine zweitgrößte Dimension des Nutzbereichs 10 als D_{y} eingezeichnet. Die Größe und Lage des Nutzbereichs 10 wird im Wesentlichen durch die Abstrahlcharakteristik, also das Strahlungsfeld 13, und die Anordnung der Strahler 6 bestimmt, wobei durch eine Anordnung der Strahler 6 an mindestens einer Seite des Aufnahmeraums 9 sichergestellt wird, dass der Nutzbereich 10 innerhalb des Aufnahmeraums 9 liegt.

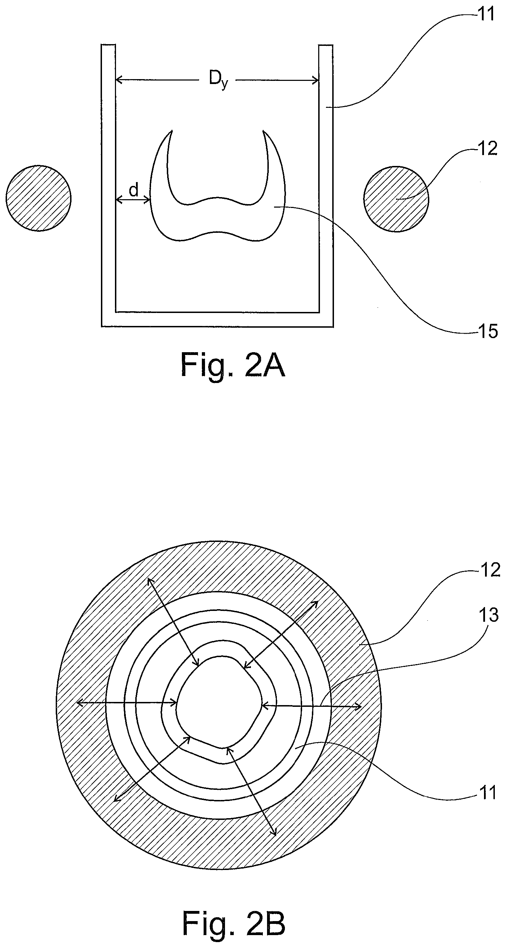

Die Erwärmung des zu sinternden Objekts 15 kann beispielsweise resistive oder induktive erfolgen. In Fig. 2A und 2B ist beispielsweise ein induktiv erwärmter Strahler 6 als Aufheizvorrichtung 5 dargestellt. Der Strahler 6 ist als Tiegel 11, beispielsweise aus MoSi₂ oder SiC, mit mindestens einer umlaufenden Spule 12 zur induktiven Erwärmung ausgebildet, wobei das Abstrahlen des Tiegels 11, also die thermische Strahlung 13, durch Pfeile angedeutet ist. In diesem Beispiel wird der Aufnahmeraum 9 durch den Innenraum des Tiegels gebildet. Der Nutzbereich 10 liegt ebenfalls im Innenraum des Tiegels 11, wobei das Verhältnis des Nutzvolumens VN des Nutzbereichs 10 zum des Bruttovolumens VB des Aufnahmeraums 9 1:1 beträgt.

Das zu sinternde Bauteil 15 wird in dem Innenraum des Tiegels 11, im mit dem Nutzbereich 13 übereinstimmenden Aufnahmeraum 9 angeordnet und weist ein Objektvolumen VO auf. Der Abstand des Objekts zum Strahler 6, also hier zum Tiegel 11 wird als d bezeichnet.

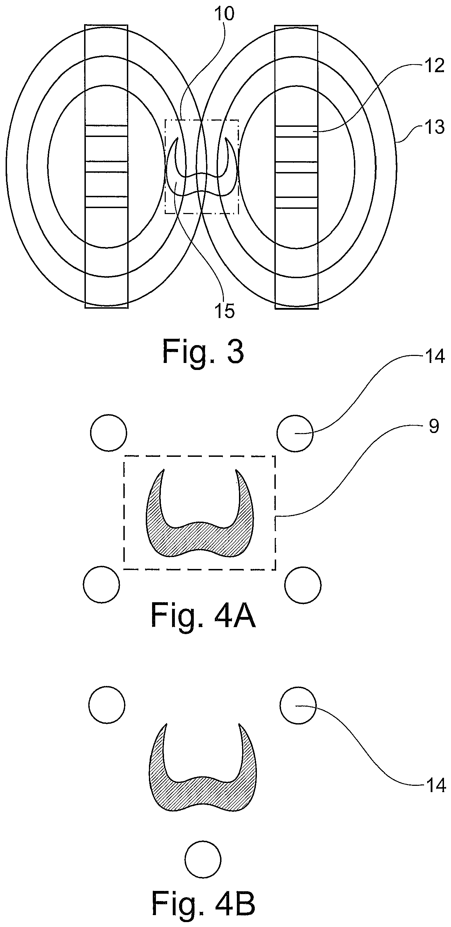

Fig. 3 zeigt einen aus zwei plattenförmigen Elementen gebildeten thermischen Strahler 6, der mittels integrierter Spulen 12 erwärmt wird. Der Aufnahmeraum 9 befindet sich entsprechend zwischen den beiden plattenförmigen Elementen. In Fig. 3 ist weiterhin das Strahlungsfeld 13 des thermischen Strahlers 6 mit Linien dargestellt. Entsprechend ergibt sich ein im Aufnahmeraum 9 angeordneter Nutzbereich 10, der einen möglichst homogenen Bereich des Strahlungsfelds 13 mit hoher Intensität abdeckt.

Die in den Fig. 4A und 4B dargestellten thermischen Strahler 6 bestehen aus drei bzw. vier stabförmigen Widerstandsheizelementen 14.

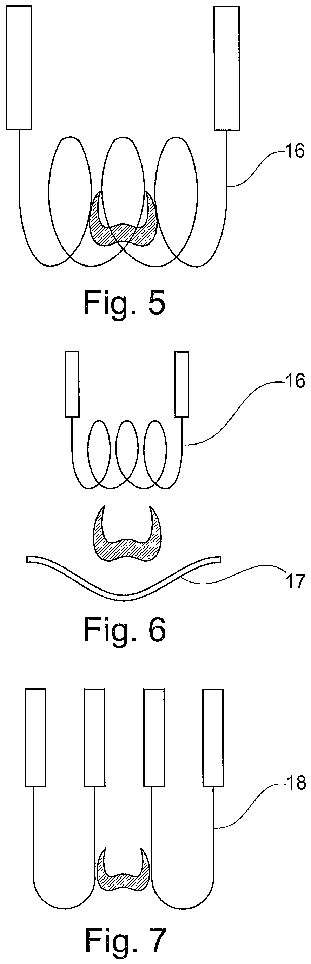

Weitere Varianten von resistiven thermischen Strahlern 6 und Anordnungen sind in den Fig. 5 bis 8 dargestellt. Der in Fig. 5 gezeigte Strahler 6 ist als Heizspirale 16 ausgebildet, wobei Aufnahmeraum 9 und Nutzbereich 10 zylinderförmig ausgebildet und innerhalb der Heizspirale angeordnet sind. In Fig. 6 ist der Strahler 6 eine Kombination aus einem Heizstrahler, hier einer Heizspirale 16 und einem Reflektor 17, wobei sich Aufnahmeraum 9 und Nutzbereich 10 zwischen der Heizspirale 16 und dem Reflektor 17 befinden. Fig. 7 zeigt einen aus zwei U-förmigen Heizelementen 18 bestehenden Strahler mit einem zwischen den beiden U-förmigen Heizelementen 18 angeordneten Aufnahmeraum 9. In Fig. 8 ist ein Strahler 6 aus zwei Flachheizelementen 19 dargestellt. Diese weisen typischerweise eine flächige Abstrahlung auf, wodurch der Nutzbereich einen besonders großen Teil des zwischen den Flachheizelementen 19 liegenden Aufnahmeraums 9 einnimmt.

### Bezugszeichenliste

- 1: Sinterofen
- 2: Ofenkammer
- 3: Wände
- 4: Isolierung
- 5: Aufheizvorrichtung
- 6: thermischer Strahler
- 7: Wandabschnitt
- 8: Unterlage
- 9: Aufnahmeraums
- 10: Nutzbereich
- 11: Tiegel
- 12: Spule
- 13: Strahlungsfeld
- 14: stabförmigen Widerstandsheizelementen
- 15: zu sinterndes Objekt
- 16: Heizspirale
- 17: Reflektor
- 18: U-förmigen Heizelementen
- 19: Flachheizelementen
- d: Abstand
- D_{y}: zweitgrößte Dimension
- VB: Bruttovolumen
- VK: Kammervolumen
- VN: Nutzvolumen
- VO: Objektvolumen

## Patentansprüche

1. Dentalsinterofen (1) für Bauteile (15) aus einem Sinterwerkstoff, umfassend eine Ofenkammer (2) mit einem Kammervolumen (VK), wobei in der Ofenkammer (2) eine Aufheizvorrichtung (5), ein Aufnahmeraum (9) mit einem im Kammervolumen (VK) liegenden durch die Aufheizvorrichtung (5) begrenzten Bruttovolumen (VB) und ein Nutzbereich (10) mit einem im Bruttovolumen (VB) liegenden Nutvolumen (VN) angeordnet sind und wobei die Ofenkammer (2) eine aus mehreren Wänden bestehende Umwandung (3) mit mindestens einem zu öffnenden Wandabschnitt (7) zum Einbringen eines zu sinternden Bauteils (15) mit einem Objektvolumen (VO) in den Aufnahmeraum (9) aufweist, **dadurch gekennzeichnet, dass**
- die Aufheizvorrichtung (5) in der Ofenkammer (2) einen thermischen Strahler (6) mit einem Strahlungsfeld (13) aufweist;
- der Strahler (6) an mindestens einer Seite des Aufnahmeraums (9) angeordnet ist;
- zumindest das im Aufnahmeraum (9) angeordnetes Nutzvolumen (VN) im direkten Strahlungsfeld (13) des Strahlers (6) angeordnet ist;
- der maximal mögliche Abstand (d) des zu sinternden Bauteils (15) zu dem Strahler (6) höchstens der zweitgrößten Dimension (D_{y}) des maximalen Nutzvolumens (VN) entspricht;
- das Nutzvolumen (VN) des Nutzbereichs (10) zum Kammervolumen (VK) der Ofenkammer (2) in einem Verhältnis von 1:50 bis 1:1 steht;
- das Nutzvolumen (VN) des Nutzbereichs (10) zum Bruttovolumen (VB) des Aufnahmeraums (9) in einem Verhältnis von 1:20 bis 1:1 steht, vorzugsweise in einem Verhältnis 1:1.

2. Dentalsinterofen (1) nach Anspruch 1, **dadurch gekennzeichnet, dass** das Nutzvolumen (VN) des Nutzbereichs (10) zum Objektvolumen (VO) des zu sinternden Bauteils (15) in einem Verhältnis von 1.500:1 bis 1:1 steht.

3. Dentalsinterofen (1) nach einem der Ansprüche 1 bis 2, **dadurch gekennzeichnet, dass** die Umwandung eine für das Strahlungsfeld (13) undurchlässige und/oder diese zurückgebende Kammerinnenwand aufweist.

4. Dentalsinterofen (1) nach einem der Ansprüche 1 bis 3, **dadurch gekennzeichnet, dass** die Aufheizvorrichtung (5) einen thermischen Strahler (6) mit einer Aufheizrate im Nutzbereich von mindestens 200 K/min bei 20°C aufweist.

5. Dentalsinterofen (1) nach Anspruch 4, **dadurch gekennzeichnet, dass** der thermische Strahler (6) resistiv oder induktiv erwärmt ist.

6. Dentalsinterofen (1) nach einem der Ansprüche 1 bis 5, **dadurch gekennzeichnet, dass** das Nutzvolumen (VN) maximal 20x20x40 mm³ beträgt und dass die Dimensionen des Nutzvolumens (VN) höchstens 20 mm x 20 mm x 40 mm sind.

7. Dentalsinterofen (1) nach einem der Ansprüche 1 bis 6, **dadurch gekennzeichnet, dass** der Strahler als Tiegel (11) ausgebildet ist.

## Claims

1. Dental sintering furnace (1) for components (15) made of a sinter material, comprising a furnace chamber (2) with a chamber volume (VK), wherein a heating device (5), a receiving space (9) with a gross volume (VB) situated within the chamber volume (VK) and bounded by the heating device (5), and a useful area (10) with a useful volume (VN) situated within the gross volume (VB) are arranged in the furnace chamber (2), and wherein the furnace chamber (2) comprises a surrounding wall (3) consisting of multiple walls with at least one wall section (7) to be opened for introducing a component (15) to be sintered with an object volume (VO) into the receiving space (9), **characterized in that**
- the heating device (5) in the furnace chamber (2) comprises a thermal radiator (6) with a radiation field (13);
- the radiator (6) is arranged on at least one side of the receiving space (9);
- at least the useful volume (VN) arranged in the receiving space (9) is arranged within the direct radiation field (13) of the radiator (6);
- the maximum possible distance (d) of the component (15) to be sintered to the radiator (6) corresponds at most to the second largest dimension (Dy) of the maximum useful volume (VN);
- the ratio of the useful volume (VN) of the useful area (10) to the chamber volume (VK) of the furnace chamber (2) is 1:50 to 1:1;
- the ratio of the useful volume (VN) of the useful area (10) to the gross volume (VB) of the receiving space (9) is 1:20 to 1:1, preferably 1:1.

2. Dental sintering furnace (1) according to Claim 1, **characterized in that** the ratio of the useful volume (VN) of the useful area (10) to the object volume (VO) of the component (15) to be sintered is 1,500:1 to 1:1.

3. Dental sintering furnace (1) according to any of Claims 1 to 2, **characterized in that** the surrounding wall comprises a chamber inner wall, which is impermeable to the radiation field (13) and/or reflects said radiation field.

4. Dental sintering furnace (1) according to any of Claims 1 to 3, **characterized in that** the heating device (5) comprises a thermal radiator (6) with a heating rate in the useful area of at least 200 K/min at 20°C.

5. Dental sintering furnace (1) according to Claim 4, **characterized in that** the thermal radiator (6) is heated resistively or inductively.

6. Dental sintering furnace (1) according to any of Claims 1 to 5, **characterized in that** the useful volume (VN) is at most 20×20×40 mm3, and that the dimensions of the useful volume (VN) are at most 20 mm × 20 mm x 40 mm.

7. Dental sintering furnace (1) according to any of Claims 1 to 6, **characterized in that** the radiator is configured as a crucible (11).

## Revendications

1. Four de frittage dentaire (1) destiné à des composants (15) en matière frittée, comprenant une chambre de four (2) présentant un volume de chambre (VK) ; dans la chambre de four (2), il se situe un dispositif de chauffage (5), un espace de réception (9) présentant un volume brut (VB) situé dans le volume de chambre (VK) et délimité par le dispositif de chauffage (5), ainsi qu'une zone utile (10) présentant un volume utile (VN) situé dans le volume brut (VB), la chambre de four (2) comportant une enceinte (3) qui est constituée de plusieurs parois et qui comporte au moins une partie de paroi (7) pouvant s'ouvrir afin d'introduire dans l'espace de réception (9) un composant (15) à fritter ayant un volume d'objet (VO), **caractérisé en ce que**
- le dispositif de chauffage (5) présent dans la chambre de four (2) dispose d'un émetteur de rayonnement thermique (6) possédant un champ de rayonnement (13) ;
- l'émetteur de rayonnement thermique (6) est disposé sur au moins un côté de l'espace de réception (9) ;
- au moins le volume utile (VN) situé dans l'espace de réception (9) est disposé dans le champ de rayonnement (13) direct de l'émetteur de rayonnement (6) ;
- la distance maximale possible (d) entre le composant (15) à fritter et l'émetteur de rayonnement (6) correspond au maximum à la deuxième dimension la plus grande (Dy) du volume utile (VN) maximal ;
- le rapport entre le volume utile (VN) de la zone utile (10) et le volume de chambre (VK) de la chambre de four (2) va de 1:50 à 1:1 ;
- le rapport entre le volume utile (VN) de la zone utile (10) et le volume brut (VB) de l'espace de réception (9) va de 1:20 à 1:1, en étant de préférence de 1:1.

2. Four à fritter dentaire (1) selon la revendication 1, **caractérisé en ce que** le rapport entre le volume utile (VN) de la zone utile (10) et le volume d'objet (VO) du composant (15) à fritter va de 1500:1 à 1:1.

3. Four à fritter dentaire (1) selon l'une des revendications 1 et 2, **caractérisé en ce que** l'enceinte présente une paroi interne de chambre imperméable au champ de rayonnement (13) et/ou reflétant celui-ci.

4. Four à fritter dentaire (1) selon l'une des revendications 1 à 3, **caractérisé en ce que** le dispositif de chauffage (5) présente un émetteur de rayonnement thermique (6) dont la vitesse de chauffage dans la zone utile est d'au moins 200 K/min à 20 °C.

5. Four à fritter dentaire (1) selon la revendication 4, **caractérisé en ce que** l'émetteur de rayonnement thermique (6) est chauffé par voie résistive ou inductive.

6. Four à fritter dentaire (1) selon l'une des revendications 1 à 5, **caractérisé en ce que** le volume utile (VN) mesure au maximum 20 x 20 x 40 mm3 et **en ce que** les dimensions du volume utile (VN) sont au maximum de 20 mm x 20 mm x 40 mm.

7. Four à fritter dentaire (1) selon l'une des revendications 1 à 6, **caractérisé en ce que** l'émetteur de rayonnement est conçu sous la forme d'un creuset (11).
